# EUROPEAN PATENT APPLICATION

(11) **EP 4 095 850 A1**
(43) Date of publication of application: **30.11.2022**
(21) Application number: 21759843.2
(22) Date of filing: 26.01.2021
(51) Int. Cl.: G10L 15/22, G10L 17/02, G10L 17/04, G10L 17/22, G06F 3/16

(54) **INSTRUCTION EXECUTION METHOD AND APPARATUS, STORAGE MEDIUM, AND ELECTRONIC DEVICE**

(30) Priority: 27.02.2020 CN 202010125950
(71) Applicant: GUANGDONG OPPO MOBILE TELECOMMUNICATIONS CORP., LTD., Dongguan, Guangdong 523860 (CN)
(72) Inventor: CHEN, Zhe, Dongguan, Guangdong 523860 (CN)
(74) Representative: Taor, Simon Edward William
(86) International application number: PCT/CN2021/073831
(87) International publication number: WO 2021/169711

(57) **Abstract**

Disclosed are an instruction execution method and apparatus, a storage medium, and an electronic device. The method comprises: when a processor is in a dormant state, controlling, by means of a specific speech recognition chip, a microphone to collect first audio data (101); on the basis of the specific speech recognition chip, checking the first audio data, and waking up the processor if the checking is passed (102); on the basis of the processor, checking the first audio data, and controlling the microphone to collect second audio data if the checking is passed (103); and on the basis of the processor, calling a pre-trained instruction recognition model to recognize a speech instruction carried by the second audio data, and executing the speech instruction (104).

## Description

This application claims the priority of a Chinese patent application with an application number 202010125950.2, entitled "INSTRUCTION EXECUTION METHOD AND APPARATUS, STORAGE MEDIUM, AND ELECTRONIC DEVICE," and filed to the China Patent Office on February 27, 2020, the entire contents of which are incorporated by reference in this application.

### BACKGROUND OF DISCLOSURE

### Field of the Disclosure

The present disclosure relates to the field of speech processing technologies, and more particularly, to an instruction execution method, apparatus, storage medium, and electronic device.

### Description of the Related Art

Currently, users can speak a wake-up word to wake up an electronic device and speak a speech instruction to control the electronic device to perform a specific operation in case of being not convenient to control the electronic device directly.

### SUMMARY

Embodiments of the present disclosure provide an instruction execution method, apparatus, storage medium, and electronic device, which can improve ease of use of speech control and reduce power consumption of the electronic device to implement speech wake-up.

In a first aspect, an embodiment of the present disclosure provides an instruction execution method, which is applied to an electronic device, wherein the electronic device includes a processor, a specific speech recognition chip, and a microphone, and power consumption of the specific speech recognition chip is less than power consumption of the processor, and the instruction execution method includes:

Controlling, by the specific speech recognition chip, the microphone to perform audio collection to obtain first audio data when the processor is in a dormant state;

Checking the first audio data, and waking up the processor if the checking passes, by the specific speech recognition chip;

Checking, by the processor, the first audio data, and controlling, by the processor, the microphone to perform audio collection to obtain second audio data if the checking passes;

Calling a pre-trained instruction recognition model to recognize a speech instruction carried by the second audio data, and executing the speech instruction, by the processor.

In a second aspect, an embodiment of the present disclosure provides an instruction execution apparatus, which is applied to an electronic device, wherein the electronic device includes a processor, a specific speech recognition chip, and a microphone, and power consumption of the specific speech recognition chip is less than power consumption of the processor, and the instruction execution apparatus includes:

An audio collection module configured to control the microphone, by the specific speech recognition chip, to perform audio collection to obtain first audio data when the processor is in a dormant state;

A first checking module configured to check the first audio data and wake up the processor if the checking passes, by the specific speech recognition chip;

A second checking module configured to check the first audio data, by the processor, and control the microphone, by the processor, to perform audio collection to obtain second audio data if the checking passes;

An instruction execution module configured to call a pre-trained instruction recognition model to recognize a speech instruction carried by the second audio data and execute the speech instruction, by the processor.

In a third aspect, an embodiment of the present disclosure provides a storage medium on which a computer program is stored, when the computer program runs on an electronic device including a processor, a specific speech recognition chip, and a microphone, the electronic device is caused to execute steps of an instruction execution method provided by an embodiment of the present disclosure, wherein power consumption of the specific speech recognition chip is less than power consumption of the processor.

In a fourth aspect, an embodiment of the present disclosure provides an electronic device, wherein the electronic device includes an audio collection module, a processor, a specific speech recognition chip, and a microphone, and power consumption of the specific speech recognition chip is less than power consumption of the processor, wherein

The specific speech recognition chip is configured to control the microphone to collect external first audio data when the processor is in a dormant state, and

Check the first audio data and wake up the processor if the check passes;

The processor is configured to check the first audio data and control the microphone to acquire external second audio data if the check passes, and

Call a pre-trained instruction recognition model to recognize a speech instruction carried by the second audio data and execute the speech instruction.

### BRIEF DESCRIPTION OF DRAWINGS

To illustrate the technical solutions in the embodiments of the present disclosure more clearly, the following briefly introduces the drawings that are used in the description of the embodiments. Obviously, the drawings in the following description are only some embodiments of the present disclosure. For those skilled in the art, other drawings can also be obtained from these drawings without creative effort.
FIG. 1 is a schematic flowchart of an instruction execution method provided by an embodiment of the present disclosure.
FIG. 2 is a schematic diagram of calling a first-stage text checking model in an embodiment of the present disclosure.
FIG. 3 is another schematic flowchart of an instruction execution method provided by an embodiment of the present disclosure.
FIG. 4 is a schematic structural diagram of an instruction execution apparatus provided by an embodiment of the present disclosure.
FIG. 5 is a schematic structural diagram of an electronic device provided by an embodiment of the present disclosure.

### DETAILED DESCRIPTION OF EMBODIMENTS

Please refer to the drawings, in which the same component symbols represent the same components, and the principles of the present disclosure are exemplified by being implemented in a suitable computing environment. The following description is based on illustrated specific embodiments of the present disclosure and should not be construed as limiting other specific embodiments of the present disclosure not detailed herein.

The embodiment of the present disclosure first provides an instruction execution method. A main body for executing the instruction execution method may be an electronic device provided by an embodiment of the present disclosure. The electronic device includes a processor, a specific speech recognition chip, and a microphone. Power consumption of the specific speech recognition chip is less than power consumption of the processor. The electronic device may be a device equipped with a processor and has processing capabilities, such as a smartphone, a tablet computer, a pocket computer, a notebook computer, a desktop computer, or the like.

The present disclosure provides an instruction execution method, which is applied to an electronic device. The electronic device includes a processor, a specific speech recognition chip, and a microphone, wherein the power consumption of the specific speech recognition chip is less than the power consumption of the processor. The instruction execution method includes:

Controlling, by the specific speech recognition chip, the microphone to perform audio collection to obtain first audio data when the processor is in a dormant state;

Checking the first audio data, and waking up the processor if the checking passes, by the specific speech recognition chip;

Checking, by the processor, the first audio data, and controlling, by the processor, the microphone to perform audio collection to obtain second audio data if the checking passes;

Calling a pre-trained instruction recognition model to recognize a speech instruction carried by the second audio data, and executing the speech instruction, by the processor.

Optionally, in one embodiment, the instruction recognition model includes a plurality of instruction recognition models corresponding to different speech instructions, wherein the calling, by the processor, the pre-trained instruction recognition model to recognize a speech instruction carried by the second audio data includes:

Calling, by the processor, each of the instruction recognition models to score the second audio data;

Using the speech instruction corresponding to the instruction recognition model giving the highest score as the speech instruction carried by the second audio data.

Optionally, in one embodiment, the using the speech instruction corresponding to the instruction recognition model giving the highest score as the speech instruction carried by the second audio data includes:

Using the speech instruction corresponding to the instruction recognition model giving the highest score reaching a preset score as the speech instruction carried by the second audio data.

Optionally, in one embodiment, the checking, by the specific speech recognition chip, the first audio data includes:

Calling, by the specific speech recognition chip, a pre-trained scene classification model to perform scene classification on the first audio data to obtain a scene classification result;

Calling, the specific speech recognition chip, a pre-trained first-stage text checking model corresponding to the scene classification result to check whether the first audio data includes a preset wake-up word.

Optionally, in one embodiment, the checking, by the processor, the first audio data includes:

Calling, by the processor, a pre-trained second-stage text checking model corresponding to the preset wake-up word to check whether the first audio data includes the preset wake-up word;

Calling, by the processor, a pre-trained second-stage voiceprint checking model when the first audio data includes the preset wake-up word, wherein the second-stage voiceprint checking model is obtained by training a speech sample including the preset wake-up word spoken by a preset user;

Checking whether a voiceprint feature of the first audio data matches a voiceprint feature of the speech sample through the second-stage voiceprint checking model.

Optionally, in one embodiment, which further includes:

Acquiring a pre-trained general checking model corresponding to the preset wake-up word, and setting the general checking model to be the second-stage text checking model, by the processor;

Controlling, by the processor, the microphone to collect the speech sample including the preset wake-up word spoken by the preset user;

Performing, by the processor, adaptive training on the general checking model with the speech sample to obtain the second-stage voiceprint checking model.

Optionally, in one embodiment, after the waking up the processor, further includes:

Controlling the specific speech recognition chip to be in dormancy.

Optionally, in one embodiment, after the calling, by the processor, the pre-trained instruction recognition model to recognize the speech instruction carried by the second audio data, further includes:

Launching, by the processor, a speech-interactive application in background when the speech instruction carried by the second audio data is not recognized;

Recognizing the speech instruction carried by the second audio data through the speech-interactive application, wherein a recognition capability of the speech-interactive application is better than a recognition capability of the instruction recognition model.

Optionally, in one embodiment, which further includes:

Switching, by the processor, a screen of the electronic device to a bright-screen state.

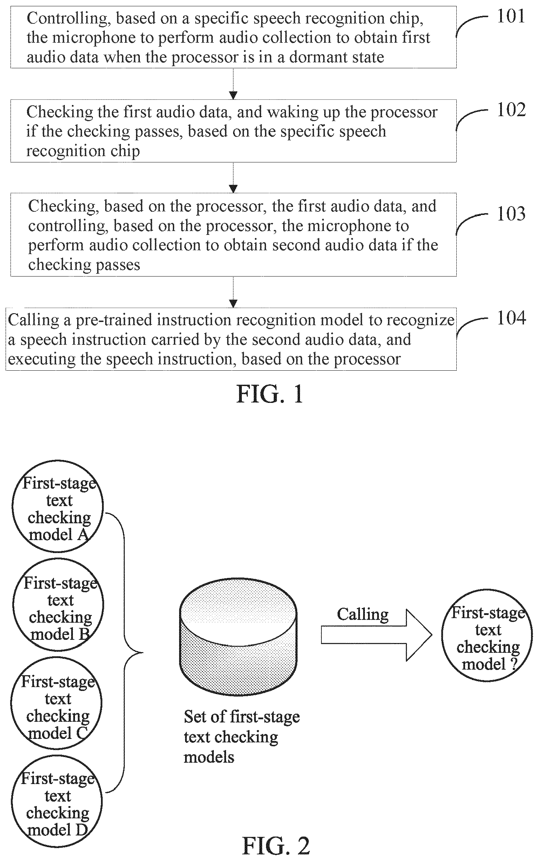

Please refer to FIG. 1, which is a schematic flowchart of an instruction execution method provided by an embodiment of the present disclosure. The instruction execution method is applied to the electronic device provided by the present disclosure. The electronic device includes a processor, a specific speech recognition chip, and a microphone. As shown in FIG. 1, a flow of the instruction execution method provided by the embodiment of the present disclosure may be as follows:

In 101, controlling, by a specific speech recognition chip, the microphone to perform audio collection to obtain first audio data when the processor is in a dormant state.

It should be noted that the specific speech recognition chip in the embodiment of the present disclosure is a special-purpose chip designed for speech recognition, such as a digital signal processing chip designed for speech or an application-specific integrated circuit designed for speech, which has lower power consumption than that of a general-purpose processor. A communication connection is established between the specific speech recognition chip and the processor via a communication bus (such as an I2C bus) to realize data interaction. The processor is in dormancy when a screen of the electronic device is in a screen-off state, and the specific speech recognition chip is in dormancy when the screen is in a bright-screen state. In addition, the microphone that is included in the electronic device may be a built-in microphone or an external microphone (which may be a wired microphone or a wireless microphone).

In an embodiment of the present disclosure, when the processor is in a dormant state (the specific speech recognition chip is in a wake-up state), the specific speech recognition chip controls the microphone to collect external sounds and records audio data that is collected to be the first audio data.

In 102, checking the first audio data, and waking up the processor if the checking passes, by the specific speech recognition chip.

Checking the first audio data by the specific speech recognition chip includes, but is not limited to, checking a text feature and/or a voiceprint feature of the first audio data.

In general, checking the text feature of the first audio data is also checking whether the first audio data includes a preset wake-up word. If the first audio data includes the preset wake-up word, checking the text feature of the first audio data passes regardless of who said the preset wake-up word. For example, the first audio data includes the preset wake-up word that is set by the preset user (for example, an owner of the electronic device or other users authorized by the owner to use the electronic device) but is spoken by a user A instead of the preset user. The specific speech recognition chip will pass the checking when the text feature of the first audio data is checked through a first checking algorithm.

Checking the text feature and the voiceprint feature of the first audio data is also to check whether the first audio data includes the preset wake-up word spoken by the preset user. If the first audio data includes the preset wake-up word spoken by the preset user, checking the text feature and the voiceprint feature of the first audio data passes, otherwise the checking fails. For example, if the first audio data includes the preset wake-up word that is set by the preset user and spoken by the preset user, checking the text feature and the voiceprint feature of the first audio data passes. For another example, if the first audio data includes the preset wake-up word that is spoken by users other than the preset user, or if the first audio data does not include the preset wake-up word that is spoken by any user, checking the text feature and the voiceprint feature of the first audio data will fail (or the checking does not pass).

In the embodiment of the present disclosure, when checking the first audio data passes, the specific speech recognition chip sends a preset interrupt signal to the processor through a communication connection between the specific speech recognition chip and the processor to wake up the processor.

It should be noted that if checking the first audio data does not be passed, the specific speech recognition chip continues to control the microphone to perform audio collection until checking the first audio data passes.

In 103, checking, by the processor, the first audio data, and controlling, by the processor, the microphone to perform audio collection to obtain second audio data if the checking passes.

After the processor is woken up, the specific speech recognition chip further provides the first audio data to the processor, and the first audio data is checked by the processor again. The Android system is taken as an example; the specific speech recognition chip can provide the first audio data to the processor through a SoundTrigger framework.

It should be noted that checking the first audio data by the processor includes, but is not limited to, checking the text feature and/or voiceprint feature of the aforementioned first audio data.

When checking the first audio data passes, the processor controls the microphone to perform audio collection and records the audio data that is collected as the second audio data.

In addition, if the processor passes, checking the first audio data, the processor also switches the screen to the bright-screen state.

In 104, calling a pre-trained instruction recognition model to recognize a speech instruction carried by the second audio data, and executing the speech instruction as mentioned above, by the processor.

It should be noted that, in the embodiment of the present disclosure, a machine learning algorithm is also used to train an instruction recognition model in advance, wherein the instruction recognition model is configured to recognize the speech instruction carried by input audio data.

Correspondingly, after the second audio data is collected, the processor calls the pre-trained instruction recognition model to input the second audio data into the instruction recognition model to perform recognition to obtain the speech instruction carried by the second audio data and executes the speech instruction.

For example, when it is recognized that the speech instruction carried by the second audio data is "launching a speech-interactive application", the processor launches a speech-interactive application to perform a more complex speech interaction with the user through the speech-interactive application.

For another example, when it is recognized that the speech instruction carried by the second audio data is "playing music", the processor launches a default music player for the user to play desired music.

It can be seen from the above that, when the processor is in the dormant state, the microphone is controlled by the specific speech recognition chip with a lower power consumption than the processor to perform audio collection to obtain the first audio data. Then, the first audio data is checked by the specific speech recognition chip, if the checking passes, the processor is woken up. Then, the first audio data is checked by the processor, if the checking passes, the microphone is controlled by the processor to perform audio collection to obtain the second audio data. Finally, the pre-trained instruction recognition model is called by the processor to recognize the speech instruction carried by the second audio data, and the speech instruction is executed. In this way, the power consumption of the electronic device for realizing speech wake-up can be reduced. Meanwhile, because recognition for the speech instruction is realized without launching the speech-interactive application, the ease of use of voice control is further improved.

In one embodiment, the instruction recognition model includes a plurality of instruction recognition models corresponding to different speech instructions, and the calling, by the processor, the pre-trained instruction recognition model to recognize the speech instructions carried by the second audio data includes:
(1) Calling, by the processor, each of the instruction recognition models to score the second audio data;
(2) Using the speech instruction corresponding to the instruction recognition model giving the highest score as the speech instruction carried by the second audio data.

It should be noted that, in the embodiment of the present disclosure, a plurality of instruction recognition models corresponding to different speech instructions are pre-trained.

Exemplarily, speech instructions such as "playing music," "opening WeChat," "launching speech-interactive application", and the like. For each speech instruction, a speech sample including the speech instruction is collected, and its spectrogram is extracted. Then, a convolutional neural network is used to train the extracted spectrogram to obtain an instruction recognition model corresponding to the speech. In this way, a plurality of instruction recognition models corresponding to different speech instructions can be trained, such as an instruction recognition model corresponding to "playing music," an instruction recognition model corresponding to "opening WeChat," an instruction recognition model corresponding to "launching the speech-interactive application," and the like.

Correspondingly, the processor calls each of the instruction recognition models to score the second audio data when recognizing the speech instruction carried by the second audio data. The score that is high or low reflects a probability that the second audio data carries a certain speech instruction. The higher the score that is given by the instruction recognition model, the higher the probability that the second audio data carries the speech instruction corresponding to the instruction recognition model.

Correspondingly, the processor may use the speech instruction corresponding to the instruction recognition model giving the highest score as the speech instruction carried by the second audio data.

Optionally, to ensure the accuracy of the recognition, the processor may further use the speech instruction corresponding to the instruction recognition model giving the highest score reaching a preset score as the speech instruction carried by the second audio data.

In an embodiment, checking, by the specific speech recognition chip, the first audio data includes:
(1) Calling, by the specific speech recognition chip, a pre-trained scene classification model to perform scene classification on the first audio data to obtain a scene classification result;
(2) Calling, by the specific speech recognition chip, a pre-trained first-stage text checking model corresponding to the scene classification result to check whether the first audio data includes a preset wake-up word.

In the embodiments of the present disclosure, first-stage checking performed by the specific speech recognition chip that includes checking a text feature is an example for description.

It should be noted that, in the embodiment of the present disclosure, a scene classification model is pre-trained using a machine learning algorithm according to speech samples of different known scenarios, and the scene classification model can be used to classify a scene where the electronic device is located.

In addition, in the embodiment of the present disclosure, a set of first-stage text checking models is pre-set in the electronic device, wherein the set of first-stage text checking models includes a plurality of first-stage text checking models pre-trained in different scenes corresponding to the preset wake-up word, suitable to be loaded in different scenarios for the specific speech recognition chip, so as to more flexibly and accurately check whether the first audio data includes the preset wake-up word.

Correspondingly, after the scene classification result corresponding to the first audio data is obtained, the electronic device calls the first-stage text checking model corresponding to the scene classification result from the set of first-stage text checking models through the specific speech recognition chip and checks whether the first audio data includes the preset wake-up word through the first-stage text checking model, if yes, the checking passes, otherwise, the checking fails.

For example, referring to FIG. 2, the set of first-stage text checking models includes four first-stage text checking models, which are a first-stage text checking model A suitable for checking audio in A scene, a first-stage text checking model B suitable for checking audio in B scene, a first-stage text checking model C suitable for checking audio in C scene, and a first-stage text checking model D suitable for checking audio in D scene. Assuming that the scene classification result indicates that the scene corresponding to the first audio data is the B scene, the electronic device loads the first-stage text checking model B from the set of first-stage text checking models through the specific speech recognition chip; it is assumed that the scene classification result indicates that scene corresponding to the first audio data is the B scene, the electronic device loads the first-stage text checking model B from the set of first-stage text checking models through the specific speech recognition chip, and so on.

In one embodiment, the checking, by the processor, the first audio data includes:
(1) Calling, by the processor, a pre-trained second-stage text checking model corresponding to the preset wake-up word to check whether the first audio data includes a preset wake-up word;
(2) Calling, by the processor, a pre-trained second-stage voiceprint checking model when the first audio data includes the preset wake-up word, wherein the second-stage voiceprint checking model is obtained by training the speech sample including the preset wake-up word spoken by a preset user;
(3) Checking whether a voiceprint feature of the first audio data matches a voiceprint feature of the speech sample through a second-stage voiceprint checking model.

In the embodiment of the present disclosure, checking a text feature and a voiceprint feature performed by the processor is an example for description.

The pre-trained second-stage text checking model corresponding to the preset wake-up word is first called, and the second-stage text checking model is used to check whether the first audio data includes the preset wake-up word, by the processor.

Exemplarily, the second-stage text checking model can be obtained by training with a scoring function, wherein the scoring function is used to map a vector to a numerical value. In addition, this is used as a constraint, a person of ordinary skill in the art can select an appropriate function as the scoring function according to actual requirements, this is not a specific limitation to the embodiments of the present disclosure.

When the second-stage text checking model is used to check whether the first audio data includes the preset wake-up word, a feature vector that can characterize the first audio data is first extracted, and then the feature vector is inputted into the second-stage text checking model for scoring to obtain a corresponding scored value. Then, the scored value is compared with a discriminant value corresponding to the second-stage text checking model, and if the scored value reaches the discriminant value corresponding to the second-stage text checking model, it is determined that the first audio data includes the preset wake-up word.

When it is checked that the first audio data includes the preset wake-up word, the pre-trained second-stage voiceprint checking model is further called by the processor, wherein the second-stage voiceprint checking model is obtained by training the speech sample including the preset wake-up word spoked by the preset user. Then, the second-stage voiceprint checking model is used to check whether the voiceprint feature of the first audio data matches the voiceprint feature of the speech sample.

Exemplarily, the second-stage voiceprint checking model can be obtained by further training the second-stage text checking model with the speech sample. When the second-stage voiceprint checking model is used to check whether the voiceprint feature of the first audio data matches the voiceprint feature of the speech sample, a feature vector that can characterize the first audio data is first extracted, and then the feature vector is inputted into the second-stage voiceprint model for scoring to obtain the corresponding scored value. Then, the scored value is compared with the discriminant value corresponding to the second-stage voiceprint checking model. If the scored value reaches the discriminant value corresponding to the second-stage voiceprint checking model, then it is determined that the voiceprint feature of the first audio data matches the voiceprint feature of the speech sample. At this time, it is determined that the checking passes; otherwise, it is determined that the checking fails.

In one embodiment, the instruction execution method provided in the present disclosure further includes:
(1) Acquiring a pre-trained general checking model corresponding to the preset wake-up word, and setting the general checking model to be a second-stage text checking model, by the processor;
(2) Controlling, by the processor, the microphone to collect the speech sample including the preset wake-up word spoken by the preset user;
(3) Performing, by the processor, adaptive training on the general checking model to obtain the second-stage voiceprint checking model.

For example, sample signals that include the preset wake-up word spoken by multiple people (such as 200 people) can be collected in advance. Then, acoustic characteristics (such as Mel frequency cepstral coefficients) of these sample signals can be extracted separately. Further, the general checking model corresponding to the preset wake-up word is obtained according to the acoustic characteristics of these sample signals. Because the general checking model is trained with a lot of audio signals unrelated to a specific person (i.e., a user), it is only fitted to a distribution of the acoustic characteristics of people and does not represent a specific person.

In the embodiment of the present disclosure, the pre-trained general checking model corresponding to the preset wake-up word may be acquired by the processor to set the general checking model to be the second-stage text checking model.

In addition, the microphone is also controlled by the processor to collect a speech sample including the preset wake-up word spoken by the preset user. Then, the acoustic characteristics of the speech sample are extracted by the processor, and the acoustic characteristics are adaptively trained using the general checking model. The general checking model that is adaptively trained is set as the second-stage voiceprint checking model. The adaptive training can be realized using a maximum posterior estimation algorithm.

In an embodiment, after the processor is woken up, the method further includes:

Controlling the specific speech recognition chip to be in dormancy.

In the embodiment of the present disclosure, after the processor is woken up, the specific speech recognition chip can be controlled to be in dormancy, to save power.

In an embodiment, after the calling, by the processor, the pre-trained instruction recognition model to recognize a speech instruction carried by the second audio data, further includes:
(1) Launching, by the processor, a speech-interactive application in background when the speech instruction carried by the second audio data is not recognized;
(2) Recognizing the speech instruction carried by the second audio data through the speech-interactive application, wherein a recognition capability of the speech-interactive application is better than a recognition capability of the instruction recognition model.

It should be noted that the instruction recognition model in the present disclosure has a weaker recognition capability than the speech-interactive application and is suitable for the execution of shortcut operations. Therefore, there may be a situation where the instruction recognition model fails to recognize (it may be that the instruction recognition model does not recognize a speech instruction or that there is no speech instruction in the second audio data). At this time, the processor launches the speech-interactive application with stronger recognition ability in the background. The speech instruction carried by the second audio data is recognized through the speech-interactive application. If the speech instruction is recognized, the recognized speech instruction is executed.

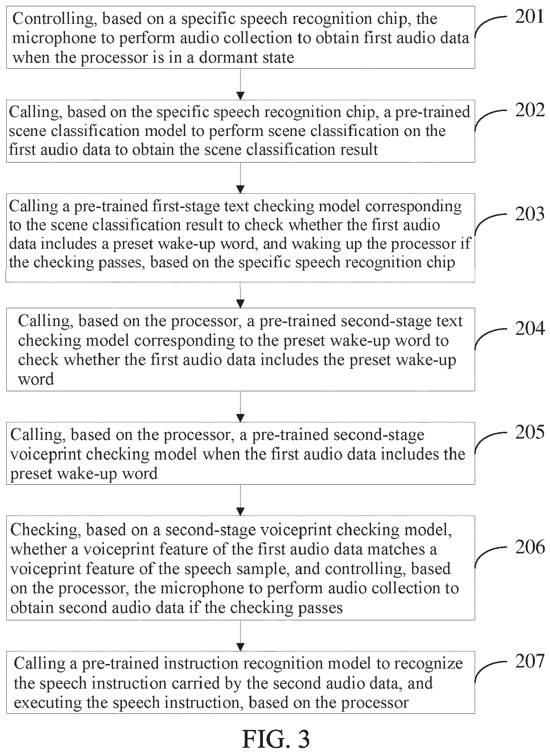

FIG. 3 is another schematic flowchart of an instruction execution method provided by an embodiment of the present disclosure. The instruction execution method is applied to the electronic device provided by the present disclosure. The electronic device includes a processor, a specific speech recognition chip, and a microphone. As shown in FIG. 3, the flow of the instruction execution method provided by the embodiment of the present disclosure may be as follows:

In 201, controlling, by a specific speech recognition chip, the microphone to perform audio collection to obtain first audio data when the processor is in a dormant state.

It should be noted that the specific speech recognition chip in the embodiment of the present disclosure is a special-purpose chip designed for speech recognition, such as a digital signal processing chip designed for speech or an application-specific integrated circuit designed for speech, which has lower power consumption than general-purpose processors. A communication connection is established between the specific speech recognition chip and the processor via a communication bus (such as an I2C bus) to realize data interaction. The processor is in dormancy when a screen of the electronic device is in a screen-off state, and the specific speech recognition chip is in dormancy when the screen is in a bright-screen state. In addition, the microphone that the electronic device includes may be a built-in microphone or an external microphone (which may be a wired microphone or a wireless microphone).

In an embodiment of the present disclosure, when the processor is in a dormant state (the specific speech recognition chip is in a wake-up state), the specific speech recognition chip controls the microphone to collect external sounds and records audio data that is collected to be the first audio data.

In 202, calling, by the specific speech recognition chip, a pre-trained scene classification model to perform scene classification on the first audio data to obtain the scene classification result;

In 203, calling a pre-trained first-stage text checking model corresponding to the scene classification result to check whether the first audio data includes a preset wake-up word, and waking up the processor if the checking passes, by the specific speech recognition chip.

In the embodiments of the present disclosure, the first-stage checking performed by the specific speech recognition chip that includes checking a text feature is an example for description.

It should be noted that, in the embodiment of the present disclosure, a scene classification model is pre-trained using a machine learning algorithm according to speech samples of different known scenarios, and the scene classification model can be used to classify a scene where the electronic device is located.

In addition, in the embodiment of the present disclosure, a set of first-stage text checking models is pre-set in the electronic device, wherein the set of first-stage text checking models includes a plurality of first-stage text checking models pre-trained in different scenes corresponding to the preset wake-up word, suitable to be loaded in different scenarios for the specific speech recognition chip, to more flexibly and accurately check whether the first audio data includes the preset wake-up word.

Correspondingly, after the scene classification result corresponding to the first audio data is obtained, the electronic device calls the first-stage text checking model corresponding to the scene classification result from the set of first-stage text checking models through the specific speech recognition chip and checks whether the first audio data includes the preset wake-up word through the first-stage text checking model, if yes, the checking passes, otherwise the checking fails.

For example, referring to FIG. 2, the set of first-stage text checking models includes four first-stage text checking models, which are a first-stage text checking model A suitable for checking audio in A scene, a first-stage text checking model B suitable for checking audio in B scene, a first-stage text checking model C suitable for checking audio in C scene, and a first-stage text checking model D suitable for checking audio in D scene. Assuming that the scene classification result indicates that the scene corresponding to the first audio data is the B scene, the electronic device loads the first-stage text checking model B from the set of first-stage text checking models through the specific speech recognition chip; it is assumed that the scene classification result indicates that scene corresponding to the first audio data is the B scene, the electronic device loads the first-stage text checking model B from the set of first-stage text checking models through the specific speech recognition chip, and so on.

In the embodiment of the present disclosure, when checking the first audio data passes, the specific speech recognition chip sends a preset interrupt signal to the processor through a communication connection between the specific speech recognition chip and the processor to wake up the processor.

It should be noted that if checking the first audio data does not be passed, the specific speech recognition chip continues to control the microphone to perform audio collection until checking the first audio data passes.

In 204, calling, by the processor, a pre-trained second-stage text checking model corresponding to the preset wake-up word to check whether the first audio data includes the preset wake-up word.

After the processor is woken up, the specific speech recognition chip further provides the first audio data to the processor, and the first audio data is checked by the processor again. The Android system is taken as an example; the specific speech recognition chip can provide the first audio data to the processor through a SoundTrigger framework.

In the embodiment of the present disclosure, checking a text feature and a voiceprint feature performed by the processor is an example for description.

The pre-trained second-stage text checking model corresponding to the preset wake-up word is first called, and the second-stage text checking model is used to check whether the first audio data includes the preset wake-up word, by the processor.

Exemplarily, the second-stage text checking model can be obtained by training with a scoring function, wherein the scoring function is used to map a vector to a numerical value. In addition, this is used as a constraint, a person of ordinary skill in the art can select an appropriate function as the scoring function according to actual requirements, this is not a specific limitation to the embodiment of the present disclosure.

When the second-stage text checking model is used to check whether the first audio data includes the preset wake-up word, a feature vector that can characterize the first audio data is first extracted, and then the feature vector is inputted into the second-stage text checking model for scoring to obtain a corresponding scored value. Then, the scored value is compared with a discriminant value corresponding to the second-stage text checking model, and if the scored value reaches the discriminant value corresponding to the second-stage text checking model, it is determined that the first audio data includes the preset wake-up word.

In 205, calling, by the processor, a pre-trained second-stage voiceprint checking model when the first audio data includes the preset wake-up word, wherein the second-stage voiceprint checking model is obtained by training a speech sample including the preset wake-up word spoken by the preset user.

In 206, checking whether a voiceprint feature of the first audio data matches a voiceprint feature of the speech sample through a second-stage voiceprint checking model, and controlling, by the processor, the microphone to perform audio collection to obtain second audio data if the checking passes.

When it is checked that the first audio data includes the preset wake-up word, the pre-trained second-stage voiceprint checking model is further called by the processor, wherein the second-stage voiceprint checking model is obtained by training the speech sample including the preset wake-up word spoked by the preset user. Then, the second-stage voiceprint checking model is used to check whether the voiceprint feature of the first audio data matches the voiceprint feature of the speech sample.

Exemplarily, the second-stage voiceprint checking model can be obtained by further training the second-stage text checking model with the speech sample. When the second-stage voiceprint checking model is used to check whether the voiceprint feature of the first audio data matches the voiceprint feature of the speech sample, a feature vector that can characterize the first audio data is first extracted, and the feature vector is inputted into the second-stage voiceprint model for scoring to obtain a corresponding scored value. Then, the scored value is compared with the discriminant value corresponding to the second-stage voiceprint checking model. If the scored value reaches the discriminant value corresponding to the second-stage voiceprint checking model, then it is determined that the voiceprint feature of the first audio data matches the voiceprint feature of the speech sample. At this time, it is determined that the checking passes; otherwise, it is determined that the checking fails.

When checking the first audio data passes, the processor controls the microphone to perform audio collection and records the audio data that is collected as the second audio data.

In addition, if the processor checks the first audio data to pass, the processor also switches the screen to a bright-screen state.

In 207, calling a pre-trained instruction recognition model to recognize the speech instruction carried by the second audio data, and executing the speech instruction, by the processor.

It should be noted that, in the embodiment of the present disclosure, a machine learning algorithm is also used to train an instruction recognition model in advance, and the instruction recognition model is configured to recognize the speech instruction carried by input audio data.

Correspondingly, after the second audio data is collected, the processor calls the pre-trained instruction recognition model to input the second audio data into the instruction recognition model to perform recognition to obtain the speech instruction carried by the second audio data and executes the speech instruction.

For example, when it is recognized that the speech instruction carried by the second audio data is "launching a speech-interactive application", the processor launches the speech-interactive application to perform a more complex speech interaction with the user through the speech-interactive application.

For another example, when it is recognized that the speech instruction carried by the second audio data is "playing music", the processor launches a default music player for the user to play desired music.

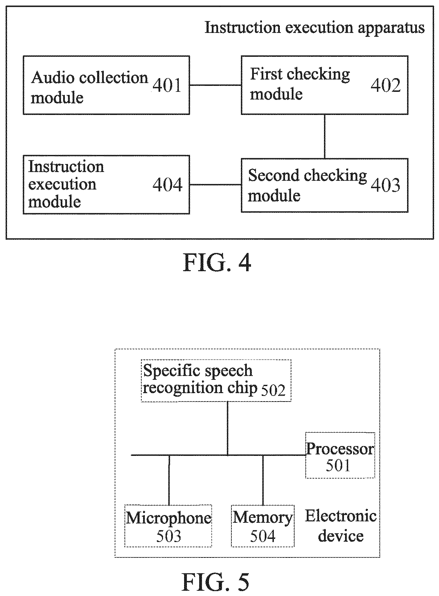

Please refer to FIG. 4, which is a schematic structural diagram of an instruction execution apparatus provided by an embodiment of the present disclosure. The instruction execution apparatus can be applied to an electronic device. The electronic device includes a processor, a specific speech recognition chip, and a microphone. Power consumption of the specific speech recognition chip is less than power consumption of the processor. The instruction execution apparatus may include an audio collection module 401, a first checking module 402, a second checking module 403, and an instruction execution module 404, in which

The audio collection module 401 is used to control the microphone, by a specific speech recognition chip, to perform audio collection to obtain first audio data when the processor is in a dormant state;

The first checking module 402 is used to check the first audio data and wake up the processor if the checking passes, by the specific speech recognition chip;

The second checking module 403 is used to check the first audio data, by the processor, and control the microphone, by the processor, to perform audio collection to obtain the second audio data if the checking passes;

The instruction execution module 404 is used to call a pre-trained instruction recognition model to recognize the speech instruction carried by the second audio data and execute the speech instruction as mentioned above, by the processor.

In one embodiment, the instruction recognition model includes a plurality of instruction recognition models corresponding to different speech instructions, when the pre-trained instruction recognition model is called by the processor to recognize the speech instruction carried by the second audio data, the instruction execution module 404 is used for:

Calling, by the processor, each of the instruction recognition models to score the second audio data;

Using the speech instruction corresponding to the instruction recognition model giving the highest score as the speech instruction carried by the second audio data.

In one embodiment, when the speech instruction corresponding to the instruction recognition model giving the highest score is used as the speech instruction carried by the second audio data, the instruction execution module 404 is used for:

Using the speech instruction corresponding to the instruction recognition model giving the highest score reaching a preset score as the speech instruction carried by the second audio data.

In one embodiment, when checking, by the specific speech recognition chip, the first audio data, the first checking module 402 is used for:

Calling, by the specific speech recognition chip, a pre-trained scene classification model to perform scene classification on the first audio data to obtain a scene classification result;

Calling, by the specific speech recognition chip, a pre-trained first-stage text checking model corresponding to the scene classification result to check whether the first audio data includes a preset wake-up word.

In one embodiment, when the first audio data is checked by the processor, the second checking module 403 is further used for:

Calling, by the processor, a pre-trained second-stage text checking model corresponding to the preset wake-up word to check whether the first audio data includes the preset wake-up word;

Calling, by the processor, a pre-trained second-stage voiceprint checking model when the first audio data includes the preset wake-up word, wherein the second-stage voiceprint checking model is obtained by training a speech sample including the preset wake-up word spoken by a preset user;

Checking whether a voiceprint feature of the first audio data matches a voiceprint feature of the speech sample through the second-stage voiceprint checking model.

In an embodiment, the instruction execution apparatus provided by the embodiment of the present disclosure further includes a model acquisition module, that is used for:

Acquiring a pre-trained general checking model corresponding to the preset wake-up word, and setting the general checking model to be a second-stage text checking model, by the processor;

Controlling, by the processor, the microphone to collect the speech sample including the preset wake-up word spoken by the preset user;

Performing, by the processor, adaptive training on the general checking model with the speech sample to obtain a second-stage voiceprint checking model.

In one embodiment, after the processor is woken up, the first checking module 402 is further used for:

Controlling the specific speech recognition chip to be in dormancy.

In one embodiment, after the pre-trained instruction recognition model is called by the processor to identify the speech instruction carried by the second audio data, the instruction execution module 404 is further used for:

Launching, by the processor, a speech-interactive application in background when the speech instruction carried by the second audio data is not recognized;

Recognizing the speech instruction carried by the second audio data through the speech-interactive application, wherein a recognition capability of the speech-interactive application is better than a recognition capability of the instruction recognition model.

In an embodiment, the instruction execution apparatus provided by the embodiment of the present disclosure further includes a state switching module, which is used to switch a screen of the electronic device to a bright-screen state.

An embodiment of the present disclosure provides a storage medium on which an instruction execution program is stored. When the stored instruction execution program is executed on the electronic device provided by the embodiment of the present disclosure, the electronic device is caused to execute steps in an instruction execution method provided by the embodiment of the present disclosure. The storage medium may be a magnetic disk, an optical disk, a read-only memory (Read Only Memory, ROM), a random access device (Random Access Memory, RAM), or the like.

Please refer to FIG. 5, an embodiment of the present disclosure also provides an electronic device, the electronic device includes a processor 501, a specific speech recognition chip 502, a microphone 503, and a memory 504, and power consumption of the specific speech recognition chip 502 is less than power consumption of the processor 501, wherein a communication connection between any two of the specific speech recognition chip 502, the processor 501, and the audio acquisition unit 501 is established via a communication bus (such as an I2C bus) to realize data interaction.

It should be noted that the specific speech recognition chip 502 in the embodiment of the present disclosure is a special-purpose chip designed for speech recognition, such as a digital signal processing chip designed for speech, a special-purpose integrated chip designed for speech, or the like, which have lower power consumption than general-purpose processors.

The processor in the embodiment of the present disclosure is a general-purpose processor, such as a processor with ARM architecture.

The memory 504 stores an instruction execution program, which may be a high-speed random access memory or a non-volatile memory, such as at least one of a magnetic disk storage device, a flash memory device, or other volatile solid-state storage devices. Correspondingly, the memory 504 may further include a memory controller to provide access to the memory 504 for the processor 501 and the specific speech recognition chip 501, and realize the following functions:

The specific speech recognition chip 502 is used to control the microphone to perform audio collection when the processor 501 is in a dormant state to obtain first audio data; and

The first audio data is checked and the processor 501 is woken up when checking passes;

The processor 501 is used to check the first audio data and control the microphone to perform audio collection when the checking passes to obtain the second audio data; and

A pre-trained instruction recognition model is called to recognize the speech instruction carried by the second audio data, and the speech instruction mentioned above is executed.

In one embodiment, the instruction recognition model includes a plurality of instruction recognition models corresponding to different speech instructions, when the pre-trained instruction recognition model is called to recognize the speech instruction carried by the second audio data, the processor 501 is used for:

Calling each of the instruction recognition models to score the second audio data;

Using the speech instruction corresponding to the instruction recognition model giving the highest score as the speech instruction carried by the second audio data.

In one embodiment, when the speech instruction corresponding to the instruction recognition model giving the highest score is used as the speech instruction carried by the second audio data, the processor 501 is used for:

Using the speech instruction corresponding to the instruction recognition model giving the highest score reaching a preset score as the speech instruction carried by the second audio data.

In one embodiment, when the first audio data is checked, the specific speech recognition chip 502 is used for:

Calling a pre-trained scene classification model to perform scene classification on the first audio data to obtain a scene classification result;

Calling a pre-trained first-stage text checking model corresponding to the scene classification result to check whether the first audio data includes a preset wake-up word.

In one embodiment, when the first audio data is checked, the processor 501 is used for:

Calling a pre-trained second-stage text checking model corresponding to the preset wake-up word to check whether the first audio data includes the preset wake-up word;

Calling a pre-trained second-stage voiceprint checking model when the first audio data includes the preset wake-up word, wherein the second-stage voiceprint checking model is obtained by pre-training a speech sample including the preset wake-up word spoken by a preset user;

Checking whether a voiceprint feature of the first audio data matches a voiceprint feature of the speech sample through the second-stage voiceprint checking model.

In one embodiment, the processor 501 is further used for:

Acquiring a pre-trained general checking model corresponding to the preset wake-up word and setting the general checking model to be a second-stage text checking model;

Controlling the microphone to collect the speech sample including the preset wake-up word spoken by the preset user;

Performing adaptive training on the general checking model with the speech sample to obtain a second-stage voiceprint checking model.

In one embodiment, the specific speech recognition chip 502 is also dormant after the processor 501 is woken up.

In one embodiment, after the pre-trained instruction recognition model is called to recognize the voice instruction carried by the second audio data, the processor 501 is further used for:

Launching a speech-interactive application in background when the speech command carried by the second audio data is not recognized;

Recognizing the speech instruction carried by the second audio data through the speech-interactive application, wherein a recognition capability of the speech-interactive application is better than a recognition capability of the instruction recognition model.

In one embodiment, the processor 501 is further used to switch a screen of the electronic device to a bright-screen state.

It should be noted that the electronic device provided by the embodiment of the present disclosure and the instruction execution method in the above embodiment belong to the same concept. Any method provided in an embodiment of the instruction execution method can be executed on the electronic device. The specific implementation process is detailed in the embodiment of the feature extraction method, which is not repeated here.

It should be noted that, for the instruction execution method of the embodiment of the present disclosure, ordinary testers in the art can understand that all or part of the process of implementing the instruction execution method of the embodiment of the present disclosure can be completed by controlling the relevant hardware through a computer program. The computer program can be stored in a computer-readable storage medium, such as in a memory of an electronic device, and executed by a processor and a specific speech recognition chip in the electronic device, and an execution process can include the flow of an embodiment of the instruction execution method. The storage medium may be a magnetic disk, an optical disk, a read-only memory, a random access memory, or the like.

An instruction execution method, a storage medium, and an electronic device provided by the embodiments of the present disclosure have been described in detail above. The principles and implementations of the present disclosure are described with specific examples. The descriptions of the above embodiments are only used to help understand the method and its kernel idea of the present disclosure. Meanwhile, there will be changes in the specific implementation and application scope for those skilled in the art according to the idea of the present disclosure. In summary, the content of the present disclosure should not be understood as limitation to the present disclosure.

## Claims

1. An instruction execution method, applied to an electronic device, wherein the electronic device comprises a processor, a specific speech recognition chip, and a microphone, and power consumption of the specific speech recognition chip is less than power consumption of the processor, wherein the instruction execution method comprises:
controlling, by the specific speech recognition chip, the microphone to perform audio collection to obtain first audio data when the processor is in a dormant state;
checking the first audio data, and waking up the processor if the checking passes, by the specific speech recognition chip;
checking, by the processor, the first audio data, and controlling, by the processor, the microphone to perform audio collection to obtain second audio data if the checking passes;
calling a pre-trained instruction recognition model to recognize a speech instruction carried by the second audio data, and executing the speech instruction, by the processor.

2. The instruction execution method as claimed in claim 1, wherein the instruction recognition model comprises a plurality of instruction recognition models corresponding to different speech instructions, and the calling, by the processor, the pre-trained instruction recognition model to recognize a speech instruction carried by the second audio data comprises:
calling, by the processor, each of the instruction recognition models to score the second audio data;
using the speech instruction corresponding to the instruction recognition model giving the highest score as the speech instruction carried by the second audio data.

3. The instruction execution method as claimed in claim 2, wherein the using the speech instruction corresponding to the instruction recognition model giving the highest score as the speech instruction carried by the second audio data comprises:
using the speech instruction corresponding to the instruction recognition model giving the highest score reaching a preset score as the speech instruction carried by the second audio data.

4. The instruction execution method as claimed in claim 1, wherein the checking, by the specific speech recognition chip, the first audio data comprises:
calling, by the specific speech recognition chip, a pre-trained scene classification model to perform scene classification on the first audio data to obtain a scene classification result;
calling, the specific speech recognition chip, a pre-trained first-stage text checking model corresponding to the scene classification result to check whether the first audio data comprises a preset wake-up word.

5. The instruction execution method as claimed in claim 4, wherein the checking, by the processor, the first audio data comprises:
calling, by the processor, a pre-trained second-stage text checking model corresponding to the preset wake-up word to check whether the first audio data comprises the preset wake-up word;
calling, by the processor, a pre-trained second-stage voiceprint checking model when the first audio data comprises the preset wake-up word, wherein the second-stage voiceprint checking model is obtained by training a speech sample comprising the preset wake-up word spoken by a preset user;
checking whether a voiceprint feature of the first audio data matches a voiceprint feature of the speech sample through the second-stage voiceprint checking model.

6. The instruction execution method as claimed in claim 5, further comprising:
acquiring a pre-trained general checking model corresponding to the preset wake-up word, and setting the general checking model to be the second-stage text checking model, by the processor;
controlling, by the processor, the microphone to collect the speech sample comprising the preset wake-up word spoken by the preset user;
performing, by the processor, adaptive training on the general checking model with the speech sample to obtain a second-stage voiceprint checking model.

7. The instruction execution method as claimed in claim 1, wherein after the waking up the processor, the method further comprises:
controlling the specific speech recognition chip to be in dormancy.

8. The instruction execution method as claimed in claim 1, wherein after the calling, by the processor, the pre-trained instruction recognition model to recognize a speech instruction carried by the second audio data, the method further comprises:
launching, by the processor, a speech-interactive application in background when the speech instruction carried by the second audio data is not recognized;
recognizing the speech instruction carried by the second audio data through the speech-interactive application, wherein a recognition capability of the speech-interactive application is better than a recognition capability of the instruction recognition model.

9. The instruction execution method as claimed in claim 1, further comprising:
switching, by the processor, a screen of the electronic device to a bright-screen state.

10. An instruction execution apparatus, applied to an electronic device, wherein the electronic device comprises a processor, a specific speech recognition chip, and a microphone, and power consumption of the specific speech recognition chip is less than power consumption of the processor, wherein the instruction execution apparatus comprises:
an audio collection module configured to control the microphone, by the specific speech recognition chip, to perform audio collection to obtain first audio data when the processor is in a dormant state;
a first checking module configured to check the first audio data and wake up the processor if the checking passes, by the specific speech recognition chip;
a second checking module configured to check the first audio data, by the processor, and control the microphone, by the processor, to perform audio collection to obtain second audio data if the checking passes;
an instruction execution module configured to call a pre-trained instruction recognition model to recognize a speech instruction carried by the second audio data and execute the speech instruction, by the processor.

11. A storage medium, wherein when a computer program stored in the storage medium runs on an electronic device comprising a processor, a specific speech recognition chip, and a microphone, the processor and the specific speech recognition chip are caused to execute:
controlling, by the specific speech recognition chip, the microphone to perform audio collection to obtain first audio data when the processor is in a dormant state;
checking, by the specific speech recognition chip, the first audio data and waking up the processor if the checking passes;
checking the first audio data, and controlling the microphone to perform audio collection to obtain second audio data if the checking passes, by the processor;
calling a pre-trained instruction recognition model to identify a speech instruction carried by the second audio data, and executing the speech instruction, by the processor;
wherein power consumption of the specific speech recognition chip is less than power consumption of the processor.

12. An electronic device, wherein the electronic device comprises a processor, a specific speech recognition chip, and a microphone, and power consumption of the specific speech recognition chip is less than power consumption of the processor, wherein
the specific speech recognition chip is configured to control the microphone to collect external first audio data when the processor is in a dormant state, and
check the first audio data and wake up the processor if the checking passes;
the processor is configured to check the first audio data and control the microphone to acquire external second audio data if the checking passes, and
call a pre-trained instruction recognition model to recognize a speech instruction carried by the second audio data and execute the speech instruction.

13. The electronic device as claimed in claim 12, wherein the instruction recognition model comprises a plurality of instruction recognition models corresponding to different speech instructions, the processor is configured to call each of the instruction recognition models to score the second audio data, and use the speech instruction corresponding to the instruction recognition model giving the highest score as the speech instruction carried by the second audio data.

14. The electronic device as claimed in claim 13, wherein the processor is configured to use the speech instruction corresponding to the instruction recognition model giving the highest score reaching a preset score as the speech instruction carried by the second audio data.

15. The electronic device as claimed in claim 12, wherein the specific speech recognition chip is used to call a pre-trained scene classification model to perform scene classification on the first audio data to obtain a scene classification result, and call a pre-trained first-stage text checking model corresponding to the scene classification result to check whether the first audio data comprises a preset wake-up word.

16. The electronic device as claimed in claim 15, wherein the processor is configured to call a pre-trained secondary text checking model corresponding to the preset wake-up word to check whether the first audio data comprises the preset wake-up word, and call a pre-trained second-stage voiceprint checking model when the first audio data comprises the preset wake-up word, wherein the second-stage voiceprint checking model is obtained by training a speech sample comprising the preset wake-up word spoken by a preset user; and check whether a voiceprint feature of the first audio data matches a voiceprint feature of the speech sample through the second-stage voiceprint checking model.

17. The electronic device as claimed in claim 16, wherein the processor is further configured to acquire a pre-trained general checking model corresponding to the preset wake-up word to set the general checking model to be the secondary text checking model, and control the microphone to collect the speech sample comprising the preset wake-up word spoken by the preset user, and adaptively train the general checking model with the speech sample to obtain the second-stage voiceprint checking model.

18. The electronic device as claimed in claim 16, wherein the specific speech recognition chip is further configured to be in dormancy after the processor is woken up.

19. The electronic device as claimed in claim 16, wherein the processor is further configured to launch a speech-interactive application in background when the speech instruction carried by the second audio data is not recognized, and recognize the speech instruction carried by the second audio data through the speech-interactive application, wherein a recognition capability of the speech-interactive application is better than a recognition capability of the instruction recognition model.

20. The electronic device as claimed in claim 12, wherein the processor is further configured to switch a screen of the electronic device to a bright-screen state.
